# EUROPEAN PATENT APPLICATION

(11) **EP 3 738 432 A1**
(43) Date of publication of application: **18.11.2020**
(21) Application number: 19174200.6
(22) Date of filing: 13.05.2019
(51) Int. Cl.: A01K 1/02

(54) **VEHICLE ANIMAL RESTRAINT ASSEMBLY**

(71) Applicant: Ningbo Geely Automobile Research & Development Co. Ltd., Hangzhou Bay New District Ningbo 315336 (CN)
(72) Inventor: JOHANSSON, Jonathan, 417 14 Göteborg (SE); LOBACHEVSKYY, Mykola, 461 55 Trollhättan (SE)
(74) Representative: Zacco Sweden AB

(57) **Abstract**

A vehicle animal restraint assembly (1) comprises an extendable structure (2), which is arranged to be moveable between a retracted state and an extended state. The extendable structure (2) is adapted to be arranged in the retracted state on one side of a space defined by a front side (3) of a seat (4, 8) in a vehicle and a part (5, 9) defining a front end of the space in front of said seat. The assembly (1) comprises an attachment means (6) adapted to be arranged on an opposite side of the space for attaching an end of the extendable structure (2) in the extended state.

## Description

### TECHNICAL FIELD

The present invention relates to a vehicle animal restraint assembly.

### BACKGROUND

Transporting pets in vehicles is often subject to various regulations. A pet that can be put in a harness is easily attached to a safety belt. However, sometimes it is desired to have a pet in a cage. There are cages that are more or less mobile and allows for putting them on a seat of the vehicle. More common is to put the cage in the trunk of a vehicle and for safety reasons it should be a vehicle with an open connection to the vehicle compartment, for instance a station wagon.

Built in cages are usually better from a volume point of view, i.e. it is easier to maximize the space for the pet. However, these cages mean that the trunk area is harder to use for transporting items when no pet is riding along in the vehicle. For solving this problem, prior art suggests several solutions for pet cages with foldable walls such that it can be folded into a more or less flat package and thus requiring a minimum of space.

Another aspect when transporting pets is the possibility to for the driver or passengers to check on the pet or pets every now and then without getting out of the vehicle. If this is required, the cage obviously needs to be arranged in the compartment of the vehicle and not in the trunk.

### SUMMARY

It is an object of the present invention to provide a restraint assembly for a pet that is minimal in size when not used and that allows for someone in the passenger compartment to check on the pet when used.

According to a first aspect of the present disclosure a vehicle animal restraint assembly is provided comprising an extendable structure which is arranged to be moveable between a retracted state and an extended state. The extendable structure is adapted to be arranged in the retracted state on one side of a space defined by a front side of a seat in a vehicle and a part defining a front end of the space in front of said seat. The assembly comprises an attachment means adapted to be arranged on an opposite side of the space for attaching an end of the extendable structure in the extended state.

Thus, the floor in front of a seat is the floor of the animal restraint assembly. Depending on the size of the vehicle, the floor area varies and thus the size of a pet that can be placed in this space. The extendable structure limits the movements of the pet to the area/space between the front of the seat and the part defining the front end of said space.

According to one aspect of the present disclosure the extendable structure is adapted to be arranged on the front side of the seat. This means that the assembly in the retracted state is arranged on the front side of the seat apart from the attachment means. The attachment means are in this case arranged at the part of the front end of the space in front of said seat.

According to an alternative aspect of the present disclosure the extendable structure is adapted to be arranged at the part of the front end of the space in front of said seat. This means that the assembly in the retracted state is arranged at the part of the front end of the space in front of said space apart from the attachment means. The attachment means are in this case arranged on the front side of the seat.

In a further aspect of the present disclosure has a flat shape in the extended state.

In yet a further aspect of the present disclosure the extendable structure has a rectangular shape in the extended state.

According to yet another aspect of the present disclosure the extendable structure is spring-loaded such that it is biased towards the retracted state. Thus, in the extended state the extendable structure could be flat and/or rectangular.

According to another aspect of the present disclosure the extendable structure is wound up on a roll in the retracted state. The function is similar to that of a roller blind but without the locking device of the spring normally used with a roller blind. The extendable structure is instead locked in the extended state by the attachment means.

According to a first alternative aspect of the present disclosure, the extendable structure is a net. A net is generally relatively easy to look through and is non-tight as regards the air. A further advantage is that in the retracted state a net usually takes up little space.

If the transparency needs to be controlled in one way or another the extendable structure is a perforated sheet according to an alternative aspect of the present disclosure. The sheet could be made in the range from completely transparent to light impenetrable.

According to a further aspect of the present disclosure the sheet is made of a polymer. Using a polymer facilitates the production and provides for a low weight relative the strength.

Said seat is according to an aspect of the present disclosure a back seat of the vehicle and the part is the back of a seat in front of the back seat.

Said seat is according to alternative aspect of the present disclosure a passenger front seat of the vehicle and the part is the vehicle dashboard.

According to one aspect of the present disclosure the assembly further comprises further restraint means adapted to be arranged sideways of the space and attached to a sideways edge of the extendable structure in the extended state. For instance, if the extendable structure in the extended state is located higher than the middle transmission tunnel or if no tunnel is present, this further restraint means prevents the pet from moving sideways.

Further features of, and advantages with, the present invention will become apparent when studying the appended claims and the following description. The skilled person realize that different features of the present invention may be combined to create embodiments other than those described in the following, without departing from the scope of the present invention.

### BRIEF DESCRIPTION OF THE DRAWINGS

The above, as well as additional objects, features and advantages of the present invention, will be better understood through the following illustrative and non-limiting detailed description of exemplary embodiments of the present invention, wherein:
Figure 1 is a schematic perspective view of a vehicle animal restraint assembly according to an embodiment of the present disclosure,
Figure 2 is a further schematic perspective view of the vehicle animal restraint assembly of figure 1,
Figure 3 is a schematic perspective view of a vehicle animal restraint assembly according to another embodiment of the present disclosure,
Figure 4 is a schematic perspective view showing a further restraint means according to an embodiment of the present disclosure,
Figure 5 is a schematic perspective view showing yet another embodiment of the vehicle animal restraint assembly according to the present disclosure,
Figure 6 shows a part of the vehicle animal restraint assembly according to an embodiment of the present disclosure, and
Figure 7 shows schematically a cross section of the part of figure 6.

### DETAILED DESCRIPTION OF EXAMPLE EMBODIMENTS OF THE INVENTION

The present invention will now be described more fully hereinafter with reference to the accompanying drawings, in which exemplary embodiments of the invention are shown. The invention may, however, be embodied in many different forms and should not be construed as limited to the embodiments set forth herein; rather, these embodiments are provided for thoroughness and completeness. Like reference character refer to like elements throughout the description.

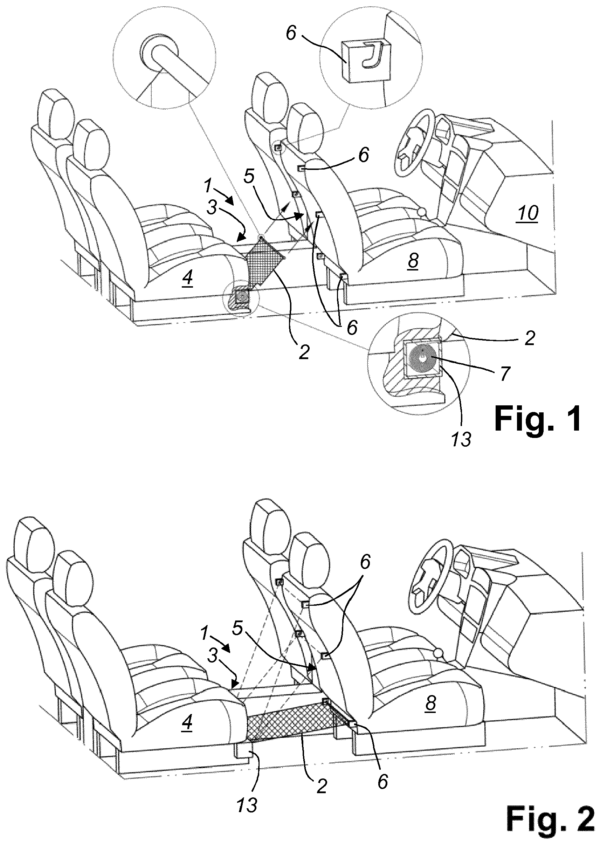

With reference to figure 1, a vehicle animal restraint assembly 1 is shown comprising an extendable structure 2 which is arranged movably between a retracted state and an extended state. The extendable structure 2 is arranged in the retracted state on one side of a space defined by the front side 3 of the seat 4 in a vehicle and a part 5 defining the front end of the space in front of said seat. The assembly 1 further comprises attachment means 6 arranged on an opposite side of the space for attaching an end of the extendable structure 2 in the extended state. There are three attachment means 6 shown in figure 1, which one to be used depends on the size of the pet to be transported.

In the embodiment shown in figure 1, the extendable structure 2 of the assembly 1 is arranged on the front side 3 of the seat 4. The seat 4 is a back seat of the vehicle and the part 5 is the back of a seat in front of the back seat.

The extendable structure 2 has a flat shape in the extended state. From a cost point of view the extendable structure 2 has a rectangular shape in the extended state.

Further, the extendable structure 2 is spring-loaded such that it is biased towards the retracted state and in the shown embodiment the extendable structure 2 is wound up on a roll 7 inside holding means 13 in the retracted state.

In figure 2, a vehicle animal restraint assembly 1 is shown comprising an extendable structure 2 which is arranged movably between a retracted state and an extended state. The extendable structure 2 is arranged in the retracted state on one side of a space defined by the front side 3 of the seat 4 in a vehicle and a part 5 defining the front end of the space in front of said seat. The assembly 1 further comprises attachment means 6 arranged on an opposite side of the space for attaching an end of the extendable structure 2 in the extended state. There are three attachment means 6 shown in the figure and the lower one is used in the shown example.

In the embodiment shown in figure 2, the extendable structure 2 of the assembly 1 is arranged on the front side 3 of the seat 4. The seat 4 is a back seat of the vehicle and the part 5 is the back of a seat in front of the back seat.

The extendable structure 2 has a flat shape in the extended state. Further, the extendable structure 2 is spring-loaded such that it is biased towards the retracted state and in the shown embodiment the extendable structure 2 is wound up on a roll inside holding means 13 in the retracted state.

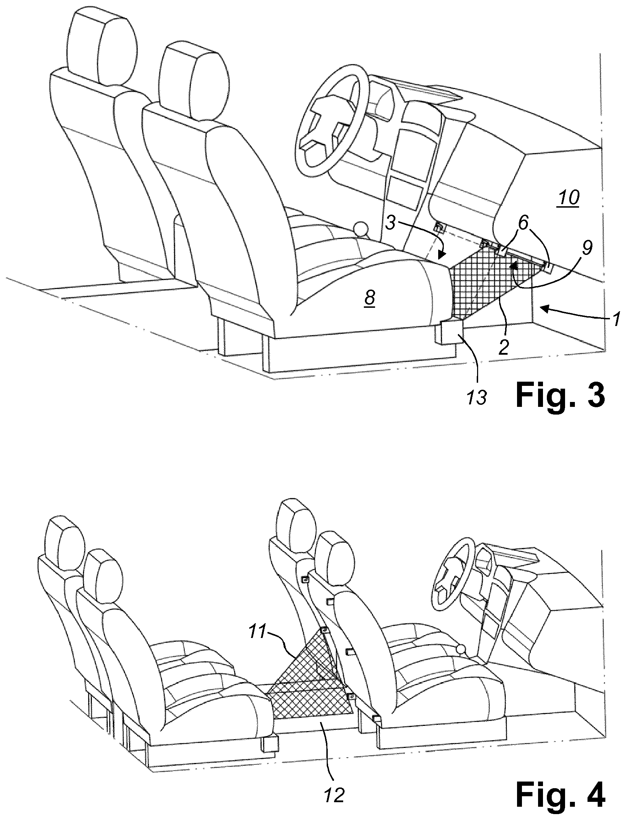

Turning to figure 3, a vehicle animal restraint assembly 1 is shown comprising an extendable structure 2 which is arranged movably between a retracted state and an extended state. The extendable structure 2 is arranged in the retracted state on one side of a space defined by the front side 3 of the seat 8 in a vehicle and a part 9 defining the front end of the space in front of said seat. The assembly 1 further comprises an attachment means 6 arranged on an opposite side of the space for attaching an end of the extendable structure 2 in the extended state. There are two attachment means 6 shown in figure 2, which one to be used depends on the size of the pet to be transported.

In the embodiment shown in figure 3, the extendable structure 2 of the assembly 1 is arranged on the front side 3 of the seat 8.The seat 8 is a passenger front seat of the vehicle and the part 9 is the vehicle dashboard 10. The extendable structure 2 has a flat shape in the extended state.

Further, the extendable structure 2 is spring-loaded such that it is biased towards the retracted state and in the shown embodiment the extendable structure 2 is wound up on a roll in the holding means 13 in the retracted state.

A further embodiment of the present disclosure is shown in figure 4. The assembly 1 further comprises restraint means 11 (shown without the extendable structure) arranged sideways of the space and arranged to be attached to a sideways edge of the extendable structure in the extended state. The lower edge of the restraint means 11 is attached to the transmission tunnel 12. The restraint means 11 is in the shown example a net. On the opposite side of the space from the restraint means 11, the door of the vehicle will act as restraint means.

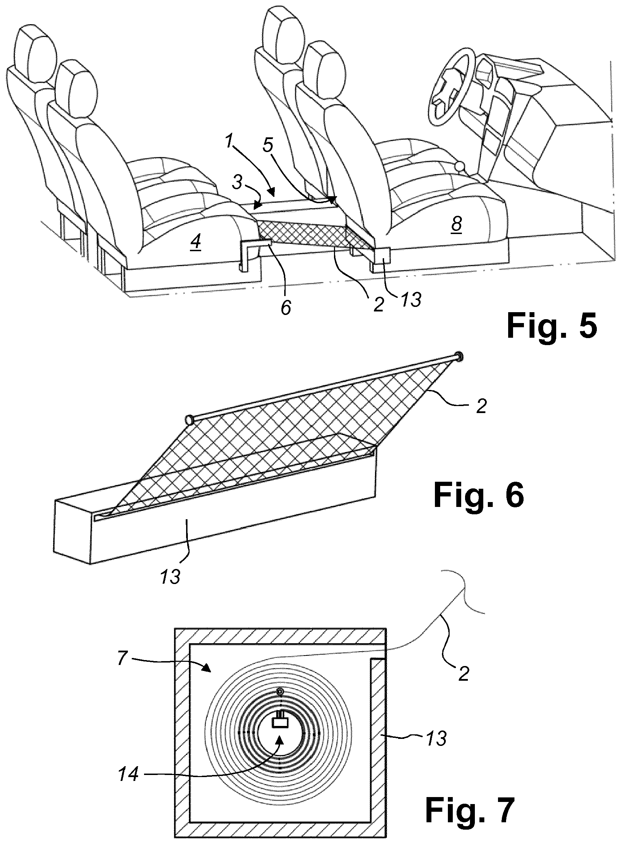

An alternative embodiment of vehicle animal restraint assembly according to the present disclosure is shown in figure 5. The vehicle animal restraint assembly 1 is shown comprising an extendable structure 2 which is arranged movably between a retracted state and an extended state. The extendable structure 2 is arranged in the retracted state on one side of a space defined by the front side 3 of the seat 4 in a vehicle and a part 5 defining the front end of the space in front of said seat. The assembly 1 further comprises attachment means 6 arranged on an opposite side of the space for attaching an end of the extendable structure 2 in the extended state.

In the embodiment shown in figure 5, the extendable structure 2 of the assembly 1 is arranged at the part 5 of the front end of the space in front of the seat 4. The seat 4 is a back seat of the vehicle and the part 5 is the back of a seat in front of the back seat.

The extendable structure 2 has a flat shape in the extended state. Further, the extendable structure 2 is spring-loaded such that it is biased towards the retracted state and in the shown embodiment the extendable structure 2 is wound up on a roll in a holding means 13 in the retracted state.

Figure 6 shows the holding means 13 for the roll 7 with the extendable structure 2 slightly pulled out.

Figure 7 shows the roll 7 in holding means 13 with an example of a spring assembly 14 for having the roll 7 spring-loaded.

It is to be understood that the present invention is not limited to the embodiments described above and illustrated in the drawings; rather, the skilled person will recognize that many changes and modifications may be made within the scope of the appended claims. For example, the attachment means 6 could be arranged permanently in several positions like in figure 1 or 2. Alternatively, the attachment means could be adapted to be mobile such that the height above the floor of the vehicle could be changed.

Further, the side restraint 11 as shown in figure 4 is attached on one side to a transmission tunnel 12. However, not all vehicles have transmission tunnels and the side restraint is then of course adapted to stretch all the way to the floor of the vehicle in which it is arranged.

## Claims

1. A vehicle animal restraint assembly (1),
**characterized in**
**that** it comprises an extendable structure (2), which is arranged to be moveable between a retracted state and an extended state, wherein the extendable structure (2) is adapted to be arranged in the retracted state on one side of a space defined by a front side (3) of a seat (4, 8) in a vehicle and a part (5, 9) defining a front end of the space in front of said seat, and wherein the assembly (1) comprises an attachment means (6) adapted to be arranged on an opposite side of the space for attaching an end of the extendable structure (2) in the extended state.

2. The assembly (1) according to claim 1, wherein the extendable structure (2) is adapted to be arranged on the front side (3) of the seat (4, 8).

3. The assembly according to claim 1, wherein the extendable structure (2) is adapted to be arranged at the part (5, 9) of the front end of the space in front of said seat (4, 8).

4. The assembly (1) according to any preceding claim, wherein the extendable structure (2) has a flat shape in the extended state.

5. The assembly (1) according to any preceding claim, wherein the extendable structure (2) has a rectangular shape in the extended state.

6. The assembly (1) according to any preceding claim, wherein the extendable structure (2) is spring-loaded such that it is biased towards the retracted state.

7. The assembly (1) according to any preceding claim, wherein the extendable structure (2) is wound up on a roll (7) in the retracted state.

8. The assembly (1) according to any preceding claim, wherein the extendable structure (2) is a net.

9. The assembly (1) according to any of the claims 1-7, wherein the extendable structure (2) is a perforated sheet.

10. The assembly (1) according to claim 9, wherein the sheet is made of a polymer.

11. The assembly (1) according to any preceding claim, wherein said seat (4) is a back seat of the vehicle and the part (5) is the back of a seat in front of the back seat.

12. The assembly according to any of the claims 1-10, wherein said seat (8) is a passenger front seat of the vehicle and the part (9) is the vehicle dashboard (10).

13. The assembly (1) according to any preceding claim, wherein the assembly (1) comprises further restraint means (11) adapted to be arranged sideways of the space and attached to a sideways edge of the extendable structure (2) in the extended state.

14. A vehicle comprising a seat (4, 8) and a part (5, 9) defining a front end of a space in front of said seat (4, 8), wherein the vehicle comprises an assembly (1) according to any of the preceding claims.
